# EUROPÄISCHE PATENTSCHRIFT

(11) **EP 3 049 696 B1**
(45) Veröffentlichungstag und Bekanntmachung des Hinweises auf die Patenterteilung: **02.05.2018**
(21) Anmeldenummer: 14766744.8
(22) Anmeldetag: 18.09.2014
(51) Int. Cl.: F16J 9/00

(54) **KOLBEN MIT KOLBENRINGNUT, INSBESONDERE KOMPRESSIONSNUT**
PISTON WITH A PISTON RING GROOVE, IN PARTICULAR A COMPRESSION GROVE
PISTON PUNI D'UNE GORGE DE SEGMENT DE PISTON, EN PARTICULIER D'UNE GORGE DE COMPRESSION

(30) Priorität: 23.09.2013 DE 102013219052
(43) Veröffentlichungstag der Anmeldung: 03.08.2016
(73) Patentinhaber: Mahle International GmbH, 70376 Stuttgart (DE)
(72) Erfinder: ISSLER, Wolfgang, 71409 Schwaikheim (DE)
(74) Vertreter: BRP Renaud & Partner mbB Rechtsanwälte Patentanwälte Steuerberater
(86) Internationale Anmeldenummer: PCT/EP2014/069922
(87) Internationale Veröffentlichungsnummer: WO 2015/040126

(56) Entgegenhaltungen:
- BE-A- 568 017
- DE-A1- 3 928 491

## Beschreibung

Die Erfindung bezieht sich auf Kolbenringnuten, insbesondere auf Kompressionsnuten, am Außenumfang eines Kolbens für Motoren mit interner Verbrennung (Siehe BE-A-568017). Entsprechend der zunehmenden Leistungsdichte bei modernen, oftmals aufgeladenen Verbrennungsmotoren sind die Kolben sehr hohen und stark wechselnden Temperatur- und Druckbeanspruchungen ausgesetzt. Gleiches gilt für die Kolbenringe, die einerseits einen hinreichenden Wärmefluss vom Kolben zum jeweiligen (gekühlten) Zylinder und andererseits eine gute Abdichtung des Spaltes zwischen dem Kolbenumfang und dem Zylinder gewährleisten müssen. Besonders starken Belastungen sind die so genannten Kompressionsringe, die nahe des Kolbenbodens und dementsprechend nahe am Brennraum des Motors angeordnet sind, ausgesetzt. Der Anpressdruck der Kompressionsringe an der Zylinderwandung wird nur zu einem relativ geringen Anteil durch elastische Verspannung des Kolbenrings erzeugt, hauptsächlich werden die Kompressionsringe durch den im Brennraum auftretenden Gasdruck gegen die Zylinderwand angedrückt. Dieser Gasdruck bewirkt einerseits, dass der Kompressionsring innerhalb der ihn aufnehmenden Ringnut am Kolbenumfang axial gegen die untere (kolbenbodenferne) Nutflanke gedrängt wird, andererseits beaufschlagt der in der Ringnut wirksame Gasdruck den Innenumfang des Kolbenrings, so dass sich dieser mit entsprechend hohem Druck mit seinem Außenumfang an die Zylinderwand anschmiegt.

Im Allgemeinen besitzen die Kolben von Verbrennungsmotoren zwei Kompressionsringe, wobei der vom Kolbenboden entferntere zweite Kompressionsring vor allem einen so genannten Blowby der Verbrennungsgase in Richtung des Kurbelraums des Motors verhindern bzw. minimieren soll.

Die zur Aufnahme der Kolbenringe dienenden umlaufenden Ringnuten am Kolben stellen unvermeidliche Einkerbungen am Außenumfang des Kolbenkörpers und damit eine unvermeidliche Strukturschwächung des Kolbenkörpers dar. Deshalb muss eine für die Strukturfestigkeit des Kolbens optimale Form der Ringnuten angestrebt werden. Hierbei besteht jedoch nur eine begrenzte konstruktive Freiheit, denn die Form der Ringnuten hat auch Rückwirkungen auf die Funktion der Kolbenringe, die gemäß den obigen Ausführungen vor allem durch den im Kolbenarbeitsraum auftretenden Gasdruck gegen die Zylinderwandung angedrückt werden. Dabei ist für die Dichtwirkung des jeweiligen Kolbenrings eine möglichst verzögerungsfreie Druckübertragung auf den Innenumfang des Kolbenrings wichtig.

Aufgabe der Erfindung ist es nun, für eine Ringnut eines Kolbens eine optimale Form zu schaffen, bei der eine gute Strukturfestigkeit des Kolbens gewährleistet wird und hinreichende konstruktive Freiheit zur Optimierung der Übertragung des Gasdrucks auf den Kolbenring gegeben ist.

Dazu ist erfindungsgemäß vorgesehen, dass der Nutgrund wenigstens einer, vorzugsweise der obersten, dem Kolbenboden nächsten Kolbenringsnut, mit größerem Krümmungsradius in die untere (kolbenbodenferne) Flanke und mit kleinerem Krümmungsradius in die obere (kolbenbodenseitige) Flanke der Ringnut übergeht.

Die Erfindung beruht auf dem allgemeinen Gedanken, bei einer oder mehreren Kolbenringnuten, vorzugsweise zumindest bei der am höchsten belasteten Kolbenringnut, die zur Aufnahme des ersten Kompressionsrings dient, bei der Formgestaltung der Ringnut die unterschiedlichen dynamischen Belastungen der Nutflanken zu berücksichtigen. Die beim Expansionshub besonders stark vom Gasdruck bzw. von dem durch den Gasdruck beaufschlagten Kolbenring beanspruchte untere Nutflanke geht mit vergleichsweise großem Krümmungsradius in den Nutgrund über, so dass Rissbildung am Übergang vermieden wird. Bei der deutlich weniger beanspruchten oberen Nutflanke ist dagegen am Übergang zum Nutgrund ohne Weiteres ein geringer Krümmungsradius möglich.

Gemäß einer Ausführungsform ist vorgesehen, dass der Bereich mit dem großen Krümmungsradius über eine mittig zwischen den Nutflanken und radial zur Kolbenachse erstreckte Mittelebene der Ringnut hinausgeht. Damit wird die vorteilhafte Möglichkeit geschaffen, dass der Nutgrund zwischen dem Bereich mit großem Krümmungsradius und dem Bereich mit kleinem Krümmungsradius einen zur Kolbenachse geneigten konischen Bereich, der sich in Richtung der oberen Nutflanke aufweitet, aufweist.

In einer bevorzugten Ausführungsform sind die obere und untere Nutflanke waagerechte, d.h. zur Kolbenachse rechtwinklig verlaufende Ebenen, wobei sich der an die untere Nutflanke anschließende Bereich mit dem großen Krümmungsradius über einen Winkel von mehr als 90°, d.h. über eine zur Kolbenachse parallele Lage hinaus erstreckt. Der Bereich mit dem kleinen Krümmungsradius erstreckt sich vorzugsweise im Anschluss an die obere Nutflanke über einen Winkel von weniger als 90°, wobei sich zwischen den beiden Ausrundungsbereichen vorteilhafterweise ein konischer Abschnitt befindet, der sich in Richtung zum Kolbenboden hin aufweitet, so dass die Nuttiefe zum Kolbenboden hin abnimmt. Dadurch können die Ausrundungen an der oberen und unteren Nutflanke jeweils vorzugsweise etwa bei der gleichen, durch den Kolbenring erforderlichen Nuttiefe bezogen auf den Kolbenumfang ansetzen, wobei die konische Fläche am Nutgrund ganz oder teilweise einen Ausgleich der verschieden großen Krümmungsradien bewirkt. Diese Ausgestaltung ermöglicht ein geringes Totvolumens hinter dem Kolbenring und damit einen niedrigen Ausstoß von unverbrannten Kohlenwasserstoffen, ohne dass der Kolbenring in eine der beiden Ausrundung am Nutgrund hinein drückt.

Vorzugsweise gehen die Nutflanken, die Radien und der Nutgrund jeweils knickfrei ineinander über, wodurch die Enstehung von Spannungsspitzen vermieden wird.

Diese Ausformung der Ringnut bietet den Vorteil, dass radial innerhalb des Innenumfangs des Kolbenrings zwischen Nutgrund und Kolbenring nur ein vergleichsweise kleiner Freiraum verbleibt. Dadurch wird eine verzögerungsfreie Druckbeaufschlagung des Innenumfangs des Kolbenrings durch den Gasdruck begünstigt. Zusätzlich reduziert sich das Totvolumen hinter dem Ring, in dem sich unvebrannte Gemischreste sammeln können. Hierdurch verringert sich die unerwünschte Emission von Kohlenwasserstoffen.

Hinsichtlich der Bemessung ist beim größeren Krümmungsradius vorzugsweise vorgesehen, dass dessen Maß einerseits größer als ein Viertel des Maßes der Nutbreite und andererseits kleiner als ein Drittel des Maßes der Nutbreite ist.

Im Übrigen wird hinsichtlich bevorzugter Merkmale der Erfindung auf die Ansprüche und die nachfolgende Erläuterung der Zeichnung verwiesen, anhand der eine besonders bevorzugte Ausführungsform der Erfindung näher beschrieben wird.

Es versteht sich, dass die dargestellten Merkmale nicht nur in der jeweils gezeigten Kombination mit anderen Merkmalen sondern auch in Alleinstellung erfindungswesentlich sein können.

In der Zeichnung zeigt
- Fig. 1: einen ausschnittsweisen Axialschnitt eines Kolbens nahe seines Kolbenbodens sowie des zugehörigen Zylinders eines Motors mit interner Verbrennung,
- Fig. 2: eine vergrößerte Darstellung des Ausschnitts II in Fig. 1.

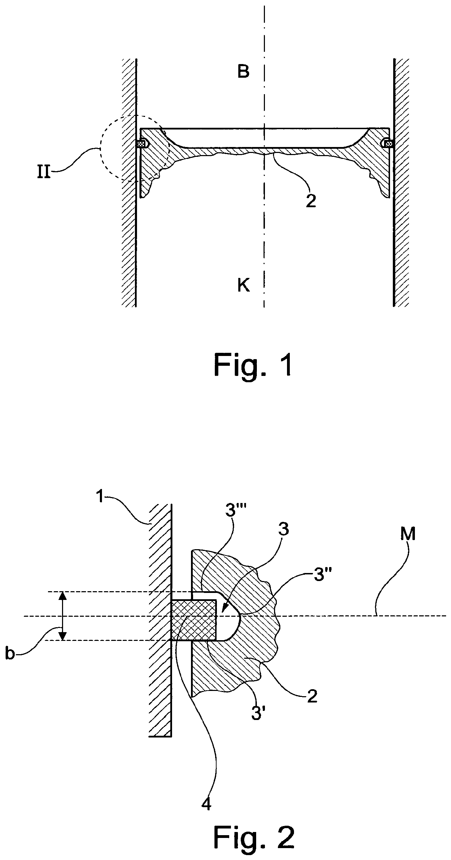

Gemäß Fig. 1 ist in einem Zylinder 1 eines Motors mit interner Verbrennung ein Kolben 2 verschiebbar angeordnet, von dem im Wesentlichen nur der Bereich des Kolbenbodens dargestellt ist, mit dem der Kolben 1 innerhalb des Zylinders einen Brennraumbereich B vom Kurbelraumbereich K abtrennt. Zur Abdichtung des Brennraumbereichs B gegenüber dem Kurbelraumbereich K ist am Kolbenumfang bzw. -hemd zumindest eine Ringnut 3 angeordnet, die einen Kolbenring 4 aufnimmt, wobei in Fig. 1 lediglich die oberste Ringnut 3 für den so genannten Kompressionsring 4 dargestellt ist. In der Regel besitzen Kolben von Motoren mit interner Verbrennung zwei Kompressionsringe sowie einen vom Kolbenboden weiter beabstandeten Ölabstreifring.

Wie insbesondere der Fig. 2 entnommen werden kann, besitzt der Kompressionsring 4 innerhalb der zugeordneten Ringnut 3 ein axiales und radiales Spiel. Beim Betrieb des Verbrennungsmotors wird der Kolbenring vom Gasdruck im Brennraum B axial gegen die in den Figuren untere Nutflanke gedrängt. Außerdem beaufschlagt der Gasdruck den Innenumfang des Kolbenrings 4, mit der Folge, dass dieser mit entsprechend verstärktem Anpressdruck an der Zylinderwand anliegt.

Wie insbesondere in Fig. 2 ersichtlich ist, geht die in der Zeichnung untere (kolbenbodenferne) Nutflanke 3' mit vergleichsweise großem Krümmungsradius in den Nutgrund 3" über. Dagegen besitzt der Übergang zwischen dem Nutgrund 3" und der oberen (kolbenbodenseitigen) Nutflanke 3'" einen vergleichsweise kleinen Krümmungsradius. Der Bereich mit dem großen Krümmungsradius geht über eine radiale Mittelebene M des Kolbens 1 hinaus, welche sich mittig zwischen den Nutflanken 3' und 3'" erstreckt. Im Anschluss an den Übergangsbereich mit großem Krümmungsradius besitzt der Nutgrund 3" einen sich in Aufwärtsrichtung, das heißt zum Brennraum B hin, erweiternden konusförmigen Bereich, der dann mit kleinem Krümmungsradius in die obere Nutflanke 3'" übergeht.

Durch diesen konusförmigen Bereich wird das Volumen des zwischen dem Innenumfang des Kolbenrings 4 und dem Nutgrund 3" verbleibenden Freiraums volumensmäßig in wünschenswerter Weise verkleinert. Dies bietet den Vorteil, dass der Gasdruck des Brennraums B weitestgehend verzögerungsfrei auf den Innenumfang des Kolbenrings 4 übertragen wird.

Der Krümmungsradius des Übergangs zwischen der unteren Nutflanke 3' und dem Nutgrund 3" besitzt vorzugsweise ein Maß, welches zwischen 0,4 b und 0,6 b liegt, wobei b den Abstand der Nutflanken 3' und 3'" voneinander bezeichnet.

### Bezugszeichenliste

- 1: Zylinder
- 2: Kolben
- 3: Ringnut
- 3', 3"': Nutflanken
- 3": Nutgrund
- 4: Kolben-, Kompressionsring

- B: Brennraum
- K: Kurbelraum
- M: Mittelebene
- b: Abstand der Nutflanken voneinander

## Patentansprüche

1. Kolben (2) für einen Motor mit interner Verbrennung mit einer am Außenumfang des Kolbens angeordneten, einen Kompressionsring (4) aufnehmenden Kompressionsnut (3), mit in Axialrichtung des Kolbens voneinander beabstandeten Nutflanken (3', 3"') und zwischen den Nutflanken erstrecktem Nutgrund (3"), wobei
der Nutgrund (3") mit größerem Krümmungsradius in die untere (kolbenbodenferne) Nutflanke (3')übergeht.
**dadurch gekennzeichnet, dass** der Nutgrund (3") mit kleinerem Krümmungsradius in die obere (kolbenbodenseitige) Nutflanke (3"') übergeht und
der Bereich mit dem großen Krümmungsradius über eine mittig zwischen den Nutflanken (3', 3"') und radial zur Kolbenachse erstreckte Mittelebene (M) der Ringnut (3) hinausgeht.

2. Kolben (2) nach Anspruch 1,
**dadurch gekennzeichnet,**
**dass** der Nutgrund (3") zwischen dem Bereich mit großem Krümmungsradius und dem Bereich mit kleinem Krümmungsradius einen zur Kolbenachse geneigten konischen Bereich aufweist, der sich in Richtung zur oberen Nutflanke (3'") hin aufweitet.

3. Kolben (2) nach einem der Ansprüche 1 und 2,
**dadurch gekennzeichnet,**
**dass** der große Krümmungsradius ein Maß aufweist, welches größer ist als ein Drittel des Abstands (b) der Nutflanken (3', 3'") voneinander.

4. Kolben (2) nach Anspruch 3,
**dadurch gekennzeichnet,**
**dass** der größere Krümmungsradius ein Maß aufweist, welches zwischen 0,4 b und 0,6 b liegt, wobei b den Abstand der Nutflanken (3', 3"') voneinander bezeichnet.

5. Kolben nach einem der Ansprüche 1 bis 4,
**dadurch gekennzeichnet,**
**dass** der Kompressionsring einen im Wesentlichen rechteckigen Querschnitt aufweist und in der Kompressionsnut (3) ein radiales und axiales Spiel besitzt.

## Claims

1. A piston (2) for an internal combustion engine, having a piston a compression groove (3), in which a compression ring (4) is arranged and which is arranged on the outer circumference of the piston and which has groove flanks (3', 3"') spaced apart from one another in an axial direction of the piston and which has a groove base (3") extending between the groove flanks, whereby the groove base (3") transitions with a relatively large radius of curvature into the lower groove flank (3'),
**characterized**
**in that** the groove base (3") transitions with a relatively small radius of curvature into the upper groove flank (3"') (at the piston crown side), and that the region with the large radius of curvature extends across a central plane (M) of the ring groove (3), which central plane runs centrally between the groove flanks (3', 3"') and radially with respect to the piston axis.

2. The piston (2) as claimed in claim 1,
**characterized**
**in that** the groove base (3") has, between the region of large radius of curvature and the region of small radius of curvature, a conical region which is inclined with respect to the piston axis and which widens in the direction toward the upper groove flank (3"').

3. The piston (2) as claimed in claim 1 or 2,
**characterized**
**in that** the large radius of curvature has a dimension greater than one third of the spacing (b) of the groove flanks (3', 3"') from one another.

4. The piston (2) as claimed in claim 3,
**characterized**
**in that** the relatively large radius of curvature has a dimension which lies between 0.4 b and 0.6 b, wherein b denotes the spacing of the groove flanks (3', 3"') from one another.

5. The piston (2) as claimed in one of claims 1 to 4,
**characterized**
**in that** the compression ring has a substantially rectangular cross-section and has radial and axial play in the compression groove (3).

## Revendications

1. Piston (2) pour un moteur à combustion interne avec une gorge de compression (3) agencée sur la circonférence extérieure du piston, recevant un anneau de compression (4), avec des flancs de gorge (3', 3"') espacés l'un de l'autre dans la direction axiale du piston et un fond de gorge (3") s'étendant entre les flancs de gorge, dans lequel
le fond de gorge (3") prend la forme du flanc de gorge inférieur (éloigné du fond de piston) (3') avec un grand rayon de courbure,
**caractérisé en ce que** le fond de gorge (3") prend la forme du flanc de gorge supérieur (côté fond de piston) (3"') avec un petit rayon de courbure et
la zone avec le grand rayon de courbure va au-delà d'un plan médian (M) de la gorge annulaire (3) s'étendant radialement à l'axe de piston et au milieu entre les flancs de gorge (3', 3"').

2. Piston (2) selon la revendication 1,
**caractérisé en ce**
**que** le fond de gorge (3") présente entre la zone à grand rayon de courbure et la zone à petit rayon de courbure, une zone conique inclinée par rapport à l'axe de piston, qui s'élargit en direction du flanc de gorge supérieur (3"').

3. Piston (2) selon l'une quelconque des revendications 1 et 2,
**caractérisé en ce**
**que** le grand rayon de courbure présente une mesure, qui est supérieure à un tiers de la distance (b) des flancs de gorge (3', 3"') l'un de l'autre.

4. Piston (2) selon la revendication 3,
**caractérisé en ce**
**que** le grand rayon de courbure présente une mesure, qui est entre 0,4 b et 0,6 b, dans lequel b désigne la distance des flancs de gorge (3', 3"') l'un de l'autre.

5. Piston selon l'une quelconque des revendications 1 à 4,
**caractérisé en ce**
**que** l'anneau de compression présente une section transversale sensiblement rectangulaire et dispose d'un jeu radial et axial dans la gorge de compression (3).
